# EUROPÄISCHE PATENTSCHRIFT

(11) **EP 2 374 637 B1**
(45) Veröffentlichungstag und Bekanntmachung des Hinweises auf die Patenterteilung: **10.07.2013**
(21) Anmeldenummer: 10003846.2
(22) Anmeldetag: 10.04.2010
(51) Int. Cl.: B60D 1/58, H01R 13/66

(54) **Elektrisches Anhängeranschlussgerät**
Electric trailer connection device
Appareil de raccordement de remorque électrique

(43) Veröffentlichungstag der Anmeldung: 12.10.2011
(73) Patentinhaber: ConWys AG, 6023 Rothenburg (CH)
(72) Erfinder: Wystron, Alexander, 6003 Luzern (CH)
(74) Vertreter: Stenger, Watzke & Ring

(56) Entgegenhaltungen:
- EP-A1- 0 692 396
- EP-A1- 1 702 802
- WO-A1-00/15464
- AU-A5- 2007 100 531
- DE-A1-102005 055 574
- US-A1- 2004 005 811
- US-A1- 2005 037 632
- US-B1- 7 118 379
- US-B1- 7 594 816

## Beschreibung

Die Erfindung betrifft ein elektrisches Anhängeranschlussgerät für ein Zugfahrzeug, mit einem Gehäuse, einer innerhalb des Gehäuses angeordneten elektronischen Schaltung und einer Anschlusskontakteinheit zum Anschließen elektrischer Komponenten eines Anhängers, eines Fahrradheckträgers und/oder dergleichen.

Elektrische Anhängeranschlussgeräte der vorgenannten, das heißt gattungsgemäßen Art sind aus dem Stand der Technik an sich bekannt, so zum Beispiel aus der EP 1 702 802 A1, der EP 1 886 848 A1, der EP 1 967 393 A1 und der US 2005/0037632 A1.

Elektrische Anhängeranschlussgeräte dienen im Allgemeinen dazu, eine elektrische Anlage eines an einem Zugfahrzeug angekoppelten Anhängers oder Fahrradheckträgers in durch das Zugfahrzeug vorgebbarer Weise zu steuern. Dabei kann die elektrische Anlage des Anhängers oder des Fahrradheckträgers eine Mehrzahl unterschiedlicher elektrischer Komponenten umfassen. Derartige elektrische Komponenten betreffen insbesondere die Beleuchtung, das heißt beispielsweise die Rückleuchten, die Bremsleuchten und/oder dergleichen Leuchten. Andere elektrische Komponenten, insbesondere eines Anhängers können eine Klimaanlage, eine Heizung und/oder dergleichen elektrische Verbraucher sein, die gleichfalls mittels des elektrischen Anhängeranschlussgerätes in vorgebbarer Weise angesteuert werden.

Elektrische Anhängeranschlussgeräte der gattungsgemäßen Art können herstellerseitig ab Werk im Zugfahrzeug installiert sein. Eine Alternative ist die Nachrüstung, weshalb gattungsgemäße Anhängeranschlussgeräte auch als Bestandteil sogenannter Nachrüstsätze erhältlich sind. Derartige Nachrüstsätze beinhalten neben einem Anhängeranschlussgerät die aus einzelnen Kabelsträngen gebildete Verkabelung, die anwenderseitig zu installieren und insbesondere an das zugfahrzeugseitige Bordnetz anzuschließen ist. Dabei verfügen die aus dem Stand der Technik vorbekannten Anhängeranschlussgeräte zumindest über eine Anschlusskontakteinheit, die der elektrischen Verbindung des Anhängeranschlussgerätes mit dem anhängerseitigen Bordnetz dient. In aller Regel ist die Anschlusskontakteinheit nach Art einer Steckdose ausgebildet, die im endfertig montierten Zustand einen hierzu korrespondierend ausgebildeten Stecker eines zum Anhänger reichenden Kabelstrangs aufnimmt.

Aus dem Stand der Technik ist es bekannt, im Zugfahrzeug Signaleinrichtungen vorzusehen, die einem Verwender im bestimmungsgemäßen Verwendungsfall den Defekt und/oder den Ausfall einer elektrischen Komponente des Anhängers oder des Fahrradheckträgers anzeigen. Insbesondere der Ausfall einer Blinkerleuchte des Anhängers oder des Fahrradheckträgers ist einem Führer des Zugfahrzeuges mittels entsprechender Signaleinrichtungen im Zugfahrzeug anzuzeigen.

Obgleich sich die aus dem Stand der Technik vorbekannten Anhängeranschlussgeräte im alltäglichen Praxiseinsatz bewährt haben, sind sie nicht frei von Nachteilen. So wird es insbesondere als nachteilig empfunden, dass eine Anschlussprüfung nach erfolgter Installation nur unzureichend möglich ist, was insbesondere im Falle der Nachrüstung zum Tragen kommt.

Es ist deshalb die **Aufgabe** der Erfindung, ein Anhängeranschlussgerät der eingangs genannten Art dahingehend zu verbessern, dass verwenderseitig insbesondere im Falle der Nachrüstung eine Verbindungsüberprüfung in einfacher Weise gestattet ist.

Zur **Lösung** dieser Aufgabe wird mit der Erfindung ein Anhängeranschlussgerät gemäß Anspruch 1 vorgeschlagen, welches gekennzeichnet ist durch eine Anschlußkontakteinheit, die sowhol zugfahrzeugseitige als auch änhangerseitige Anschlüsse bereitstellt und welches einen Fehlerspeicher umfasst, der dazu dient, diagnostizierte Fehler aufzunehmen.

Im bestimmungsgemäßen Verwendungsfall stehen die anhängerseitig vorgesehenen Anschlüsse des Anhängeranschlussgeräts mit der elektrischen Anlage des Anhängers in elektrischer Verbindung, wobei bevorzugterweise je Anschluss eine elektrische Komponente der elektrischen Anlage des Anhängers vorgesehen ist. Neben diesen elektrischen Anschlüssen kann das Anhängeranschlussgerät auch in elektrischer Verbindung mit einem Datenbus, beispielsweise einem CAN-Bus stehen. Diese vom Anhängeranschlussgerät zur Verfügung gestellten Anschlüsse sind in der Anschlusskontakteinheit des Anhängeranschlussgerätes zusammengefasst.

Das Anhängeranschlussgerät verfügt zugfahrzeugseitig über entsprechende Anschlüsse, wobei vorgesehen ist, dass diese Anschlüsse gleichfalls von der Anschlusskontakteinheit bereitgestellt sind.

Das Anhängeranschlussgerät nach der Erfindung verfügt über eine Diagnoseschaltung. Diese dient dazu, die im bestimmungsgemäßen Verwendungsfall mit den Anschlüssen des Anhängeranschlussgerätes ausgebildeten elektrischen Verbindungen zu überprüfen. Die Diagnoseschaltung gestattet insofern eine Anschlussüberprüfung des Anhängeranschlussgeräts.

Das Ergebnis einer Anschlussüberprüfung wird einem Verwender mittels einer vom Anhängeranschlussgerät bereitgestellten Anzeigeeinrichtung unmittelbar mitgeteilt. Erfindungsgemäß ist in diesem Zusammenhang vorgesehen, dass die Anzeigeeinrichtung mit der Diagnoseschaltung in kommunikationstechnischer Verbindung steht und gehäuseaußenseitig am Gehäuse angeordnet ist. Diese erfindungsgemäße Ausgestaltung erlaubt es einem Verwender in vorteilhafter Weise, den ordnungsgemäßen Anschluss des Anhängeranschlussgerätes an das Bordnetz und/oder die elektrische Anlage des Zugfahrzeuges bzw. des Anhängers nach erfolgter Installation unmittelbar überprüfen zu können. Bei einem nicht ordnungsgemäßen Anschluss des Anhängeranschlussgerätes wird über die anhängeranschlussgeräteigene Anzeigeeinrichtung ein für den Verwender wahrnehmbares Signal abgegeben, das ihn über eine negativ ausgefallene Anschlussüberprüfung informiert. Zur Behebung des Anschlussfehlers kann verwenderseitig sodann eine Neuinstallation bzw. Neueinrichtung des Anhängeranschlussgerätes vorgenommen werden. Die erfindungsgemäße Ausgestaltung ermöglicht somit nicht nur, in einfacher Weise eine Überprüfung auf ordnungsgemäße Installation, sie ist auch aus sicherheitstechnischen Gründen von Vorteil, da im Falle einer Fehlinstallation ein sofortiger Hinweis an den Verwender erfolgt. Anders als aus dem Stand der Technik vorbekannt, findet also nicht nur eine Ausfallprüfung elektrischer Komponenten im Verwendungsfall, sondern eine Anschlussüberprüfung statt, die bereits im Rahmen der Installation, das heißt vor einer eigentlichen Inbenutzungnahme durchgeführt wird.

Die Anzeigeeinrichtung ist bevorzugterweise als optische Anzeigeeinrichtung ausgestaltet und verfügt über Leuchtmittel, vorzugsweise LEDs. Es können eine Mehrzahl von LEDs vorgesehen sein, die gegebenenfalls auch zu einer Einheit zusammengefasst sein können. Bevorzugterweise sind die LEDs in ihrer Farbgebung unterschiedlich ausgestaltet. In Kombination oder auch alternativ zu LEDs können weitere Anzeigemittel vorgesehen sein, beispielsweise Anzeigedisplays. Gegenüber LEDs haben derartige Displays den Vorteil, dass sie nicht nur eine Fehlermeldung anzeigen können, sondern darüber hinaus auch die Möglichkeit bieten, Fehlercodes auszugeben, was einen vereinfachten Rückschluss auf den Grund einer Fehlermeldung zulässt.

Das erfindungsgemäße Anhängeranschlussgerät verfügt gemäß einem weiteren Merkmal der Erfindung über einen Signalgeber. Der Einsatz eines Signalgebers macht insbesondere in Kombination mit Leuchtmitteln, wie beispielsweise LEDs Sinn. Dabei dient der Signalgeber dazu, in Abhängigkeit des festgestellten Anschlussfehlers die von der Anzeigeeinrichtung bereitgestellten LEDs in vorbestimmbarer Weise anzusteuern, um ein dem vorhandenen Fehler entsprechendes Lichtsignal auszugeben. So kann beispielsweise vorgesehen sein, dass die LEDs unterschiedlich aufleuchten oder aufblinken, gegebenenfalls auch unterschiedlich schnell, je nachdem, welcher Anschlussfehler vorliegt. Über den erfindungsgemäß vorgegebenen Signalgeber wird ein solches Aufleuchten bzw. Aufblinken in vorteilhafter Weise gesteuert.

Gemäß einem weiteren Merkmal der Erfindung ist die zur Anschlussprüfung vorgesehene Diagnoseschaltung als integraler Bestandteil der elektronischen Schaltung des Anhängeranschlussgerätes ausgebildet. Im Sinne dieser Erfindung bedeutet "integraler Bestandteil", dass die ohnehin vorhandene elektronische Schaltung des Anhängeranschlussgerätes die für eine Diagnose erforderlichen Funktionen bereitstellt. Damit kann die ohnehin vorgesehene elektronische Schaltung ohne jegliche Modifikation zugleich auch als Diagnoseschaltung im Sinne der Erfindung genutzt werden. Die von der elektronischen Schaltung ohnehin zur Verfügung gestellten Funktionalitäten werden in diesem Fall zu Diagnosezwecken genutzt und mittels der erfindungsgemäß vorgesehenen Anzeigeeinrichtung zur Anzeige gebracht.

Alternativ zur vorbeschriebenen Ausgestaltung kann vorgesehen sein, dass die Diagnoseschaltung als zur elektronischen Schaltung separate Schaltung ausgebildet ist. In diesem Fall wird die ohnehin vorgesehene elektronische Schaltung des Anhängeranschlussgerätes um eine weitere Schaltung, nämlich die Diagnoseschaltung ergänzt. Dabei stellen die Diagnoseschaltung einerseits und die elektronische Schaltung andererseits jeweils voneinander separate Schaltungen dar. Gemäß dieser alternativen Ausgestaltung hat die elektronische Schaltung keinen Anteil an der Anschlussüberprüfung. Diese wird allein durch die als separate Schaltung ausgebildete Diagnoseschaltung vorgenommen.

Gemäß einer zweiten Alternative ist vorgesehen, dass die Diagnoseschaltung mehrteilig ausgebildet ist, wobei ein erster Teil als integraler Bestandteil der elektronischen Schaltung und ein zweiter Teil als eine zur elektrischen Schaltung separate Schaltung ausgebildet ist. Gemäß dieser alternativen Ausgestaltung wird ein Teil der Diagnoseschaltung durch die ohnehin vom Anhängeranschlussgerät bereitgestellte elektronische Schaltung bereitgestellt. Ein anderer Teil der Diagnoseschaltung ist durch eine separat zur elektronischen Schaltung ausgebildete Schaltung gebildet. Beide Schaltungen bilden zusammen die Diagnoseschaltung aus. Diese Ausgestaltung ist insbesondere dann sinnvoll, wenn die ohnehin vorgesehene elektronische Schaltung bereits über einige Funktionalitäten verfügt, die zu Diagnosezwecken genutzt werden können. Der als separate Schaltung ausgebildete zweite Teil der Diagnoseschaltung ergänzt diese Funktionalitäten um solche, die von der ohnehin vorgesehenen elektronischen Schaltung nicht zur Verfügung gestellt werden können. Im Ergebnis ergibt sich so eine Schaltung mit Funktionalitäten, die einerseits durch die elektronische Schaltung und andererseits durch die separat hierzu ausgebildete zusätzliche Schaltung zur Verfügung gestellt werden.

Gemäß einem weiteren Merkmal der Erfindung ist das erfindungsgemäße Anhängeranschlussgerät durch einen Fehlerspeicher gekennzeichnet. Dieser Fehlerspeicher dient dazu, diagnostizierte Fehler aufzunehmen, was es gestattet, im Nachhinein eine Fehlerhistorie aufstellen zu können, was es in vorteilhafter Weise gestattet, im Nachgang eines Fehlers ermitteln zu können, wann und warum er aufgetreten ist.

Der Fehlerspeicher kann im Übrigen dazu dienen, ausgelöste Resets und die diesen zugrundeliegenden Umstände zu dokumentieren. Dies ist vorteilhaft, um detektieren zu können, welche externen Störungen zu einem Neustart der Elektronik geführt haben. Der Fehlerspeicher kann darüber hinaus dazu dienen, Fehler im Bussystem des Zugfahrzeuges und/oder des Anhängers aufzuzeichnen, die durch den Anschluss des Anhängeranschlussgerätes entstanden sind. Die Registrierung derartiger Fehler ist mit Blick auf die Überwachung des Gesamtsystems vorteilhaft, da so sehr schnell ausfindig gemacht werden kann, welche elektrische/elektronische Einheit und/oder Komponente das Bussystem gestört bzw. zur Fehlerauslösung geführt hat.

Darüber hinaus kann im Falle von Kanalausfällen mittels des Fehlerspeichers abgespeichert werden, welcher Kanal zu welchem Zeitpunkt ausgefallen ist. Dies ermöglicht es, im Nachhinein feststellen zu können, welche Funktionalitäten zu welchem Zeitpunkt gegeben bzw. nicht gegeben waren.

Als Fehlerspeicher kommt bevorzugterweise ein nicht flüchtiger Speicher in Frage, wie zum Beispiel ein EEPROM (electrically erasible programmable read only memory).

Weitere Merkmale und Vorteile der Erfindung ergeben sich aus der nachfolgenden Beschreibung anhand der Fign. Dabei zeigen
- Fig. 1: in rein schematischer Darstellung ein gattungsgemäßes Anhängeranschlussgerät und
- Fig. 2: in schematisch perspektivischer Ansicht ein Anhängeranschlussgerät nach der Erfindung.

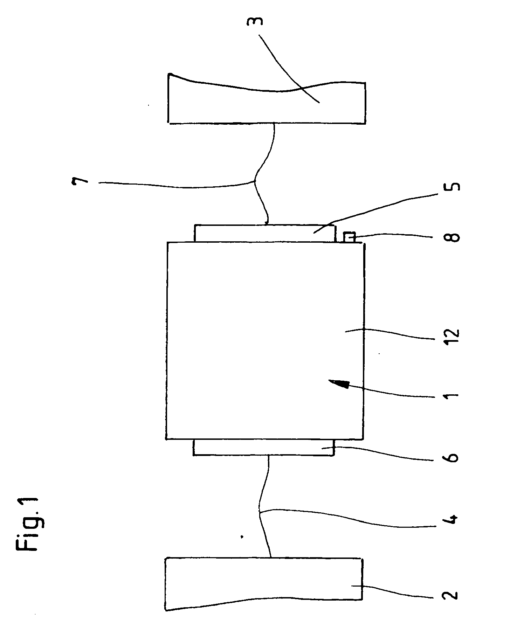

Fig. 1 lässt in schematischer Darstellung den Verwendungszustand eines Anhängeranschlussgerätes 1 erkennen.

Das Anhängeranschlussgerät 1 verfügt über ein Gehäuse 12, das eine in den Fign. nicht näher dargestellte elektronische Schaltung aufnimmt. Das Anhängeranschlussgerät 1 dient dem Anschluss elektrischer Komponenten eines Anhängers 3 oder eines Fahrradheckträgers, die in den Fign. nicht im Einzelnen dargestellt sind. Elektrische Komponenten sind beispielsweise Leuchten des Anhängers 3, wie beispielsweise Brems-, Rück- und/oder Blinkleuchten. Andere elektrische Komponenten können beispielsweise eine Klimaanlage, eine Heizung oder dergleichen sein.

Zum Anschluss des Anhängeranschlussgerätes 1 an die elektrischen Komponenten des Anhängers 3 dient anhängeranschlussgerätseitig eine Anschlusskontakteinheit 5. Die elektrische Verbindung zwischen dem Anhängeranschlussgerät 1 und den elektrischen Komponenten des Anhängers 3 ist durch eine Kabelverbindung 7 realisiert.

Die elektrischen Komponenten des Anhängers 3 sind quasi unter elektrischer Zwischenschaltung des Anhängeranschlussgerätes 1 an die elektrische Anlage und/oder das Bordnetz eines Zugfahrzeuges 2 angeschlossen. Das Anhängeranschlussgerät 1 verfügt zu diesem Zweck über eine Anschlusskontakteinheit 5, an die im bestimmungsgemäßen Verwendungsfall eine Kabelverbindung 4 angeschlossen ist, die ihrerseits in elektrischer Verbindung mit der in den Fign. nicht näher dargestellten elektrischen Anlage und/oder dem Bordnetz des Zugfahrzeuges 2 in Verbindung steht.

Die von der Anschlusseinrichtung 6 bereitgestellten Anschlüsse sind als Anschlüsse der Anschlusskontakteinheit 5 ausgestaltet. Eine separate Anschlusseinrichtung 6 ist nicht vorgesehen. Stattdessen kommt ausschließlich eine Anschlusskontakteinheit 5 zum Einsatz, die sowohl zugfahrzeugseitige als auch anhängerseitige Anschlüsse bereitstellt. Der Verkabelungsaufwand bei der Installation des Anhängeranschlussgerätes 1 ist gemäß dieser Ausgestaltung in vorteilhafter Weise verringert.

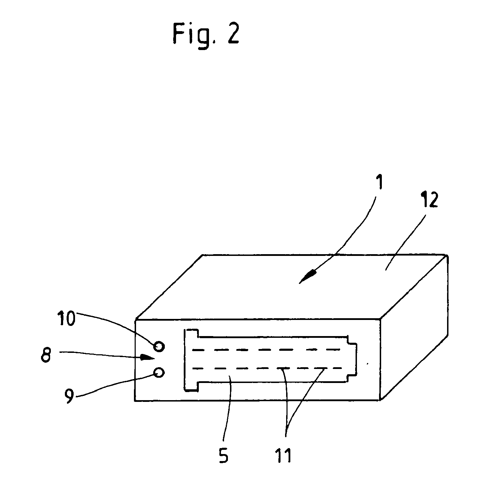

Die von der Anschlusskontakteinheit 5 bereitgestellten Kontakte 11 lassen sich insbesondere der Darstellung nach Fig. 2 entnehmen, die das Anhängeranschlussgerät 1 in einer perspektivisch schematischen Ansicht zeigt.

Der Darstellung nach Fig. 2 ist ferner zu entnehmen, dass das Gehäuse 12 gehäuseaußenseitig eine Anzeigeeinrichtung 8 trägt, die im gezeigten Ausführungsbeispiel aus zwei LEDs 9 und 10 gebildet ist. "Gehäuseaußenseitig" im Sinne der Erfindung bedeutet, dass die LEDs 9 und 10 der Anzeigeeinrichtung 8 derart am Gehäuse 12 angeordnet sind, dass sie von einem Verwender visuell wahrgenommen werden können, wenn sich das Anhängeranschlussgerät 1 in einer bestimmungsgemäßen Einbausituation befindet, wie sie rein schematisch in Fig. 1 dargestellt ist.

Die Anzeigeeinrichtung 8 steht mit einer in den Fign. nicht näher dargestellten und im Gehäuse 12 des Anhängeranschlussgerätes 1 angeordneten Diagnoseschaltung in kommunikationstechnischer Verbindung. Diese Diagnoseschaltung dient der Anschlussprüfung. Wird diesbezüglich ein Fehler detektiert, so kommt es zu entsprechenden Anzeigen über die Anzeigeeinrichtung 8, was von einem Verwender des erfindungsgemäßen Anhängeranschlussgerätes 1 unmittelbar wahrgenommen werden kann. Eine sofortige Behebung des Fehlers ist so in vorteilhafter Weise gestattet.

Das Anhängeranschlussgerät 1 verfügt darüber hinaus über einen Fehlerspeicher, der dazu dient, entstandene und detektierte Fehler aufzunehmen. Die Aufstellung einer Fehlerhistorie ist so im Nachhinein möglich.

Die Funktionsweise der in den Fign. beispielhaft dargestellten Anzeigeeinrichtung 8 sei anhand einiger Beispiele wie folgt erläutert:
1. Leuchtet die gemäß der Zeichnungsebene nach Fig. 2 obere LED 10 dauerhaft auf, so signalisiert dies, dass der zugfahrzeugseitige Bus, beispielsweise ein CAN-Bus nicht korrekt an das Anhängeranschlussgerät 1 angeschlossen ist.
2. Blinkt die LED 10, so wird hierdurch signalisiert, dass eine Speiseleitung nicht und/oder nicht korrekt an das Anhängeranschlussgerät 1 angeschlossen ist.
3. Leuchtet die mit Bezug auf die Zeichnungsebene nach Fig. 2 untere LED 9 dauerhaft auf, so wird hierdurch signalisiert, dass sämtliche Anschlüsse, das heißt Kontakte 11 des Anhängeranschlussgerätes 1 korrekt angeschlossen sind, das heißt in elektrischer Verbindung stehen, ein Anhänger 3 aber nicht angeschlossen ist.
4. Blinkt die LED 9, so zeigt dies an, dass sämtliche Anschlüsse, das heißt Kontakte 11 des Anhängeranschlussgerätes 1 korrekt angeschlossen sind, das heißt in elektrischer Verbindung stehen und ein Anhänger 3 angeschlossen ist.

Die vorstehend aufgeführten Beispiele sind lediglich als Erläuterung und nicht einschränkend zu verstehen. Es können selbstredend auch andere Leuchtkodierungen eingesetzt werden. Darüber hinaus ist es gemäß einem weiteren Merkmal der Erfindung möglich, anstelle oder in Ergänzung zu LEDs ein Anzeigedisplay zu verwenden. Ein solches Display bietet die Möglichkeit, Fehlercodes beispielsweise in Form von Buchstaben- und/oder Zahlenfolgen auszugeben, was es vereinfacht, Anschlussfehler ausfindig machen zu können. Im Übrigen ist das erfindungsgemäße Anhängeranschlussgerät auch in Kombination mit einem Fahrradheckträger verwendbar, der beispielsweise heckseitig des Zugfahrzeuges am Zugfahrzeug angeordnet werden kann.

**Bezugszeichenliste**

| | |
|---|---|
| 1 | Anhängeranschlussgerät |
| 2 | Zugfahrzeug |
| 3 | Anhänger |
| 4 | Kabelverbindung |
| 5 | Anschlusskontakteinheit |
| 6 | Anschlusseinrichtung |
| 7 | Kabelverbindung |
| 8 | Anzeigeeinrichtung |
| 9 | LED |
| 10 | LED |
| 11 | Kontakt |
| 12 | Gehäuse |

## Patentansprüche

1. Elektrisches Anhängeranschlussgerät (1) für ein Zugfahrzeug (2), das dem Anschluss elektrischer Komponenten eines Anhängers (3) dient, mit einem Gehäuse (12), einer innerhalb des Gehäuses (12) angeordneten elektronischen Schaltung, einer Anschlusskontakteinheit (5), die sowohl zugfahrzeugseitige als auch anhängerseitige Anschlüsse bereitstellt, einer Diagnoseschaltung, die dazu dient, im bestimmungsgemäßen Verwendungsfall mit in Anschlüssen ausgebildete elektrische Verbindungen zu überprüfen, was eine Anschlussprüfung gestattet, und mit einer gehäuseaußenseitig am Gehäuse (12) angeordneten und mit der Diagnoseschaltung in kommunikationstechnischer Verbindung stehende Anzeigeeinrichtung (8), die über Leuchtmittel und einen Signalgeber verfügt, wobei das Ergebnis einer Anschlussüberprüfung einem Verwendung mittels der Anzeigeeinrichtung (8) unmittelbar mitgeteilt wird, sowie mit einem Fehlerspeicher, der dazu dient, diagnostizierte Fehler aufzunehmen.

2. Anhängeranschlussgerät nach Anspruch 1, **dadurch gekennzeichnet, dass** die Diagnoseschaltung integraler Bestandteil der elektronischen Schaltung ist.

3. Anhängeranschlussgerät nach Anspruch 1, **dadurch gekennzeichnet, dass** die Diagnoseschaltung als zur elektronischen Schaltung separate Schaltung ausgebildet ist.

4. Anhängeranschlussgerät nach Anspruch 1, **dadurch gekennzeichnet, dass** die Diagnoseschaltung mehrteilig ausgebildet ist, wobei ein erster Teil als integraler Bestandteil der elektronischen Schaltung und ein zweiter Teil als eine zur elektronischen Schaltung separate Schaltung ausgebildet ist.

5. Anhängeranschlussgerät nach einem der vorhergehenden Ansprüche, **dadurch gekennzeichnet, dass** die Diagnoseschaltung und die elektronische Schaltung auf einem gemeinsamen Schaltungsträger angeordnet sind.

6. Anhängeranschlussgerät nach einem der vorhergehenden Ansprüche, **dadurch gekennzeichnet, dass** die Anzeigeeinrichtung (8) eine LED (9, 10) aufweist.

7. Anhängeranschlussgerät nach einem der vorhergehenden Ansprüche, **dadurch gekennzeichnet, dass** die Anzeigeeinrichtung (8) ein Anzeigedisplay aufweist.

8. Anhängeranschlussgerät nach Anspruch 1, **dadurch gekennzeichnet, dass** der Fehlerspeicher ein EEPROM ist.

## Claims

1. An electric trailer connection device (1) for a towing vehicle (2), which connection device serves to the connection of electric components of a trailer (3) and comprises a housing (12), an electronic circuit disposed within the housing (12), a connection contact unit (5) which provides electric outlets both on the towing vehicle and on the trailer, a diagnostic circuit which serves to check electric connections formed in electric outlets in the due application case, which allows a connection check, and comprising a display device (8) which is disposed on the outer face of the housing (12) and is in communication technical connection to the diagnostic circuit, which display device comprises illuminants and a signal transmitter, wherein the result of a connection check is directly communicated to a user by means of the display device (8), as well as comprising a fault recorder which serves to record diagnosed faults.

2. A trailer connection device according to claim 1, **characterized in that** the diagnostic circuit is an integral component of the electronic circuit.

3. A trailer connection device according to claim 1, **characterized in that** the diagnostic circuit is designed as separate circuit with respect to the electronic circuit.

4. A trailer connection device according to claim 1, **characterized in that** the diagnostic circuit is made of several parts, wherein a first part is an integral component of the electronic circuit and a second part is designed as separate circuit with respect to the electronic circuit.

5. A trailer connection device according to one of the preceding claims, **characterized in that** the diagnostic circuit and the electronic circuit are disposed on a common circuit carrier.

6. A trailer connection device according to one of the preceding claims, **characterized in that** the display device (8) comprises a LED (9, 10).

7. A trailer connection device according to one of the preceding claims, **characterized in that** the display device (8) comprises an indication display.

8. A trailer connection device according to claim 1, **characterized in that** the fault recorder is an EEPROM.

## Revendications

1. Dispositif de raccord électrique d'une remorque (1) destiné à un véhicule de traction (2), lequel dispositif de raccord sert au raccord des composants électriques d'une remorque (3), comprenant un boîtier (12), un circuit électronique disposé à l'intérieur du boîtier (12), une unité de contact de connexion (5) qui fournit des bornes et du côté du véhicule de traction et du côté de la remorque, un circuit de diagnostic qui sert à contrôler des connexions électriques réalisées dans des bornes au cas d'utilisation conforme, ce qui permet de vérifier des connexions, et comprenant un dispositif d'affichage (8) qui est disposé sur la face extérieure du boîtier (12) et est relié par technique de communication au circuit de diagnostic, lequel dispositif d'affichage comprend des agents lumineux et un poste transmetteur des signaux, le résultat d'une vérification de connexion (8) étant immédiatement communiqué à un utilisateur par moyen du dispositif d'affichage (8), ainsi que comprenant un enregistreur de perturbations qui sert à enregistrer des perturbations diagnostiquées.

2. Dispositif de raccord d'une remorque selon la revendication 1, **caractérisé en ce que** le circuit de diagnostic est une composante intégrale du circuit électronique.

3. Dispositif de raccord d'une remorque selon la revendication 1, **caractérisé en ce que** le circuit de diagnostic est un circuit séparé par rapport au circuit électronique.

4. Dispositif de raccord d'une remorque selon la revendication 1, **caractérisé en ce que** le circuit de diagnostic est un circuit à plusieurs parties, la première partie étant une composante intégrale du circuit électronique et une deuxième partie étant réalisée comme circuit séparé par rapport au circuit électronique.

5. Dispositif de raccord d'une remorque selon l'une des revendications précédentes, **caractérisé en ce que** le circuit de diagnostic et le circuit électronique sont disposés sur un support de circuits commun.

6. Dispositif de raccord d'une remorque selon l'une des revendications précédentes, **caractérisé en ce que** le dispositif d'affichage (8) comprend une DEL (9, 10).

7. Dispositif de raccord d'une remorque selon l'une des revendications précédentes, **caractérisé en ce que** le dispositif d'affichage (8) comprend un display d'indication.

8. Dispositif de raccord d'une remorque selon la revendication 1, **caractérisé en ce que** l'enregistreur des perturbations est un EEPROM.
